# EUROPÄISCHE PATENTSCHRIFT

(11) **EP 0 321 386 B1**
(45) Veröffentlichungstag und Bekanntmachung des Hinweises auf die Patenterteilung: **28.06.1995**
(21) Anmeldenummer: 88710053.5
(22) Anmeldetag: 13.12.1988
(51) Int. Cl.: F24H 1/32

(54) **Gliederkessel**
Sectional boiler
Chaudière sectionnée

(30) Priorität: 17.12.1987 AT 3326/87
(43) Veröffentlichungstag der Anmeldung: 21.06.1989
(73) Patentinhaber: Joh. Vaillant GmbH u. Co., 42810 Remscheid (DE); n.v. Vaillant s.a., 1620 Drogenbos (BE); VAILLANT S.A.R.L, 94537 Rungis Cedex (FR); VAILLANT Ges.m.b.H, 1233 Wien (AT); Vaillant Ltd., Rochester Kent ME2 4EZ (GB); Vaillant B.V., 1105 BJ Amsterdam (NL); Vaillant GmbH, 8953 Dietikon 1 (CH)
(72) Erfinder: Schilling, Jürgen, D-5632 Wermelskirchen (DE)
(74) Vertreter: Heim, Johann-Ludwig, Dipl.-Ing.

(56) Entgegenhaltungen:
- DE-A- 3 102 703
- GB-A- 437 010

## Beschreibung

Die Erfindung bezieht sich auf einen Gliederkessel gemäß dem Oberbegriff des unabhängigen Patentanspruchs.

Ein solcher Gliederkessel ist bekanntgeworden aus der GB 437 010. Hierbei ist ein Kesselgliederblock vorgesehen, der aus die Brennkammer und einen Teil der Abgasführung begrenzenden Kesselgliedern, einem Brennkammer-Endglied und mehreren, die Abgasführung bis zum Abgasauslaß begrenzenden Kesselgliedern besteht. Letztere Kesselglieder erstrecken sich über die gesamte Kesselbreite und werden mäanderförmig vom Abgas umströmt.

Der vorliegenden Erfindung liegt die Aufgabe zugrunde, einen derartigen Gliederkessel hinsichtlich der Wärmetauschereigenschaften zu verbessern, wobei auf einfache Art und Weise Kessel verschieden hoher Leistung herstellbar sein sollen, vor allem aber Kessel, die sich durch die Höhe der Endtemperatur der den Kessel verlassenden Abgase unterscheiden, insbesondere auch Kondensationskessel mit geringen Abgastemperaturen und Kondensatsammler.

Erfindungsgemäß wird die Aufgabe durch die kennzeichnenden Merkmale des unabhängigen Anspruchs gelöst.

Durch die Zapfenform der Innenteile ist eine Verbesserung der Wärmetauschereffektivität erreichbar.

Durch Variation der Zahlen der verwendeten Kesselglieder können erstens Kessel unterschiedlicher Leistung und zweitens Kessel unterschiedlicher Abgastemperaturen bei gleicher oder unterschiedlicher Leistung erstellt werden. Dem die Brennkammer umschließenden Teil des Kessels können solche Kesselglieder, die nur der Abgasführung und -kühlung dienen, in beliebiger Anzahl angereiht werden, um stufenweise gestaffelt Gliederkessel mit verschieden hohen Abgas-Endtemperaturen - bis hin zu Kondensationskesseln, die durch ihre besonders niedrigen Abgas-Endtemperaturen charakterisiert sind - anzufertigen. Aus denselben Kesselgliedern können aber auch konventionelle Kessel zusammengestellt werden.

Bei Kondensationskesseln ist unter den Abgas-Kesselgliedern vorteilhafterweise ein Kondensatsammler vorgesehen, um das in diesem Bereich des Kessels anfallende Kondensat aufzunehmen.

In den Zeichnungen ist ein Ausführungsbeispiel eines erfindungsgemäßen Gliederkessels veranschaulicht und nachstehend erläutert.

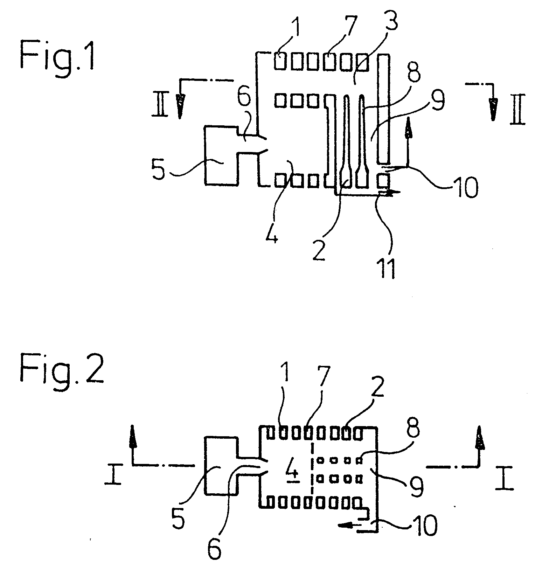

Im einzelnen zeigt
Figur 1 den Gliederkessel in einem schematischen Vertikalschnitt nach I-I der Figur 2 und die
Figur 2 einen schematischen Horizontalschnitt nach II-II der Figur 1.

Der dargestellte Gliederkessel besteht aus einem Block von Kesselgliedern 1 und 2. Die Kesselglieder 1 begrenzen sowohl einen horizontal verlaufenden Zug 3 der Abgasführung als auch eine Brennkammer 4, die Kesselglieder 2 hingegen begrenzen nur diesen horizontalen Teil 3 der Abgasführung.

Ein über ein Gebläse 5 betriebener Brenner 6 ist der Frontwand des Kessels angefügt.

Ein Kesselglied 7 begrenzt gemeinsam mit der Frontwand die Brennkammer 4 und bildet deren dem Brenner 6 gegenüberliegende Rückwand; diesem Kesselglied 7 sind die übrigen Kesselglieder 2 in Strömungsrichtung der Abgase nachgereiht, die lediglich den Abgaszug 3 begrenzen.

Diese übrigen Kesselglieder 2 sind zwecks Verbesserung des Wärmetauschers und Kühlung der Abgase innerhalb der die Kesselwandung bildenden wasserführenden Außenteile in schlanke, vertikal verlaufende wasserführende Innenteile 8 gegliedert, die sich von dem horizontalen Teil der Abgasführung, also vom Abgaszug 3 in einem vertikalen Teil 9 bis zu dem im Bodenbereich des Kessels vorgesehenen Abgasauslaß 10 erstrecken und über ihre Länge vom Abgas umspült werden. Diesen übrigen Kesselgliedern 2 ist ein Kondensatsammler 11 untergeordnet, sie bilden den Kondensationsbereich des Kessels, in dem die Abgase bis auf eine niedrige Temperatur abgekühlt werden, deren Höhe von der Anzahl der aneinandergereihten Kesselglieder 2 abhängig ist.

## Patentansprüche

1. Gliederkessel mit einer Brennkammer und mit wasserführenden Kesselgliedern, wobei ein Teil der Kesselglieder die Brennkammer und zusätzlich einen horizontalen Teil einer Abgasführung begrenzt und ein die Rückwand der Brennkammer bildendes Kesselglied vorgesehen ist, dem in der Strömungsrichtung der Abgase die übrigen, nur die Abgasführung begrenzenden Kesselglieder nachgereiht sind, und wobei diese übrigen Kesselglieder innerhalb der die Kesselwandungen bildenden Außenteile in vertikal verlaufende Innenteile gegliedert sind, die sich vom horizontalen Teil der Abgasführung bis zu einem Abgasauslaß erstrecken und innerhalb eines vertikalen Teils der Abgasführung über ihre Länge vom Abgas umspült sind, dadurch gekennzeichnet, daß die Innenteile (8) der übrigen Kesselglieder (2) von den die Kesselwandungen bildenden Außenteilen beabstandet und zapfenförmig ausgebildet sind, wobei sich die Innenteile (8) vom horizontalen Teil (3) der Abgasführung bis zu einem im Bodenbereich des Kessels vorgesehenen Abgasauslaß (10) erstrecken und ihre Mantelflächen allseits vom Abgas umspült sind.

2. Gliederkessel nach Anspruch 1, dadurch gekennzeichnet, daß unter diesen übrigen Kesselgliedern (2) ein Kondensatsammler (11) vorgesehen ist.

## Claims

1. A sectional boiler comprising a combustion chamber and exhaust gas-conducting boiler sections, wherein a part of the boiler sections defines the combustion chamber and, in addition, a horizontal portion of an exhaust gas duct, a boiler section is provided, which constitutes the rear wall of the combustion chamber and is succeeded in the direction of flow of the exhaust gases by the remaining boiler sections, which define only the exhaust gas duct, said remaining boiler sections comprise vertically extending inner parts, which are disposed inside the outer parts, which constitute the walls of the boiler, and said inner parts extend from the horizontal portion of the exhaust gas duct to an exhaust gas outlet and within a vertical portion of the exhaust gas duct are flown around by the exhaust gas throughout their length, characterized in that the inner parts (8) of the remaining boiler sections (2) are spaced from the outer parts, which constitute the boiler walls, and are pin-shaped, the inner parts (8) extend from the horizontal portion (3) of the exhaust gas duct as far as to an exhaust gas outlet (10), which is provided near the bottom of the boiler, and the peripheral surfaces of said inner parts (8) are flown around by the exhaust gases everywhere.

2. A sectional boiler according to claim 1, characterized in that a condensate collector (11) is provided under said remaining boiler sections (2).

## Revendications

1. Chaudière sectionnée comprenant une chambre de combustion et des éléments canalisant l'eau, dont une partie constitue la chambre de combustion et, de plus, une partie horizontale d'un canal d'évacuation des fumées, un de ces éléments, formant le fond de la chambre de combustion, étant suivi des autres éléments disposés dans le sens d'écoulement des fumées et formant seulement le canal d'évacuation des fumées, ces éléments comprenant dans les composants extérieurs formant l'enveloppe de la chaudière des composants intérieurs verticaux s'étendant depuis la partie horizontale du canal d'évacuation des fumées jusqu'à une sortie et léchés par les fumées sur toute la longueur de cette partie verticale du canal d'évacuation, chaudière caractérisée par le fait que les composants intérieurs (8) des autres éléments de chaudière (2) ont une forme élancée et se trouvent à une certaine distance des composants extérieurs formant l'enveloppe de la chaudière, ces composants intérieurs (8) léchés complètement par les fumées s'étendant depuis la partie horizontale (3) du canal d'évacuation des fumées jusqu'à une sortie des fumées (10) aménagée au bas de la chaudière.

2. Chaudière sectionnée suivant la revendication 1, caractérisée par le fait qu'au-dessous de ces autres éléments (2) est disposé un collecteur d'eau de condensation (11).
